# FASCICULE DE BREVET EUROPEEN

(11) **EP 2 679 870 B1**
(45) Date de publication et mention de la délivrance du brevet: **03.09.2014**
(21) Numéro de dépôt: 13173374.3
(22) Date de dépôt: 24.06.2013
(51) Int. Cl.: F16K 49/00, F16K 31/06

(54) **Vanne pilote électropneumatique avec drain thermique**
Elektropneumatisches Steuerventil mit Kühlkörper
Electropneumatic servo valve with heat sink.

(30) Priorité: 25.06.2012 FR 1256001
(43) Date de publication de la demande: 01.01.2014
(73) Titulaire: Asco Joucomatic SA, 92500 Rueil Malmaison (FR)
(72) Inventeur: Schmidt, Michel, 28170 SAINT MAIXME HAUTERIVE (FR); Vandamme, Richard, 28300 CINTRAY (FR)
(74) Mandataire: Nony

(56) Documents cités:
- US-A- 5 769 508
- US-A1- 2003 115 950
- US-B1- 6 427 970

## Description

La puissance de l'air comprimé destinée aux vérins et moteurs doit être contrôlée. Le distributeur situé entre la source d'énergie pneumatique et l'actionneur remplit cette fonction.

Ces distributeurs pneumatiques nécessitent généralement l'utilisation de vannes pilotes électropneumatiques pour permettre leur commande de basculement d'état. Ces pilotes électropneumatiques sont généralement de type électromagnétique et génèrent de ce fait un échauffement lié à l'effet Joule dû au courant électrique parcourant la bobine inductrice.

Dans le but de limiter cet échauffement, il est d'usage : soit de limiter la puissance de la bobine, mais la performance pneumatique se trouve alors dégradée, soit de positionner les pilotes électropneumatiques de manière à évacuer directement leur chaleur vers l'extérieur. Cette construction contraint fortement les connexions pneumatiques et électriques et impacte de ce fait le dimensionnel du distributeur pneumatique.

Des solutions pour la dissipation de chaleur sont mentionnées par exemple dans les documents US2003/0115950, US6427970 ou US5769508.

Cet inconvénient est encore plus important dans le cas d'îlots de distribution pneumatique composés de plusieurs distributeurs pneumatiques juxtaposés. Cette juxtaposition en confinant les sources thermiques, abaisse encore les capacités d'échange thermique avec l'extérieur.

Cette problématique d'échange thermique et de son amélioration est connue des fabricants de composants électriques.

Dans le domaine des transformateurs électriques la solution présentée dans le brevet JP2010027733 propose d'accélérer la dissipation de chaleur par une simple plaque métallique avec contact thermique.

Malheureusement ces solutions se sont révélées insuffisantes pour évacuer suffisamment de chaleur et garantir un fonctionnement optimal des dispositifs.

L'invention a donc pour but, surtout, de proposer un dispositif permettant d'optimiser les échanges thermiques vers l'extérieur.

Selon l'invention un dispositif de distribution pneumatique comprenant au moins une vanne pilote électromagnétique, un corp de distribution et au moins un drain thermique présentant une conductivité thermique mesurée suivant la norme ASTM D5470 supérieure ou égale à 0.5 W/m-K, le drain thermique étant disposé entre au moins une vanne pilote électromagnétique et le corps de distribution.

Le dispositif de distribution pneumatique comprend également une ligne de distribution pneumatique associée à une chemise et un tiroir mobile à étanchéité élastomère ou glissante dite « métal / métal », avec ou sans dispositif de commande manuelle et avec ou sans circuit imprimé liant les pilotes aux circuits de commande électrique. Dans le cas de l'utilisation d'un circuit imprimé, le drain thermique autorise une plus grande proximité entre le pilote et les composants électroniques du circuit sans risque d'endommagement des composants du circuit grâce à une meilleure évacuation de la chaleur générée par le pilote.

Une embase pneumatique simple est également prévue, cas d'un distributeur isolé, ou une embase pneumatique juxtaposable pour constituer un ilot de distribution.

L'utilisation d'un ou plusieurs drains thermiques permettant le captage et l'orientation du flux thermique émit par ceux-ci permet d'obtenir une limitation de l'échauffement des pilotes électromagnétiques. Il est également envisageable d'associer ces drains à l'assemblage du corps de distribution et de l'embase pneumatique, afin d'augmenter encore la capacité d'échange thermique entre ces deux parties.

De manière avantageuse le drain thermique présente une conductivité thermique mesurée suivant la norme ASTM D5470 supérieure ou égale à 0.9 W/m-K.

De manière plus avantageuse le drain thermique présente une conductivité thermique mesurée suivant la norme ASTM D5470 supérieure ou égale à 1.2 W/m-K.

Le dispositif peut être assemblé sur une embase pneumatique métallique, au moins un drain thermique étant interposé entre le corps de distribution et l'embase pneumatique.

Le drain thermique peut présenter une dureté Shore 00 mesurée suivant la norme ASTM D 2240 comprise entre 30 et 80.

De manière avantageuse le drain thermique présente une dureté Shore 00 mesurée suivant la norme ASTM D 2240 comprise entre 40 et 70.

De manière plus avantageuse le drain thermique présente une dureté Shore 00 mesurée suivant la norme ASTM D 2240 comprise entre 40 et 50.

Le drain thermique peut être obtenu par polymérisation ou solidification d'un matériau liquide ou pâteux.

D'autres caractéristiques et avantages de l'invention apparaîtront dans la description qui suit d'un mode de réalisation préféré (distributeur bistable avec deux pilotes électromagnétiques et embase pneumatique juxtaposable) avec référence aux dessins annexés mais qui n'a aucun caractère limitatif. Sur ces dessins :
La figure 1 est un schéma illustrant le détail de montage d'un drain thermique selon l'invention entre le pilote et le corps de distribution.
La figure 2 est un schéma illustrant l'ensemble du corps de distribution avec la disposition des pilotes et leur drain respectif ainsi que les drains sur le corps de distribution.
La figure 3 représente le corps de distribution monté sur l'embase pneumatique.
La figure 4 représente un mode de réalisation en ilot de distribution pneumatique.

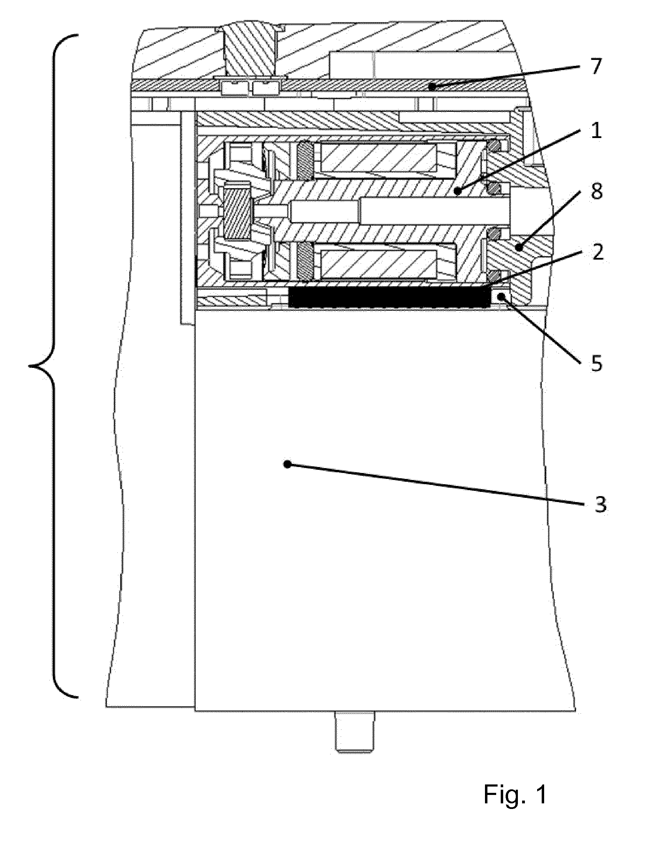

Il est visible sur les figures 1 à 4 qu'un élément mis en forme à partir d'un matériau à haute conductivité thermique appelé drain 2, est utilisé pour capter et orienter par conduction le flux thermique. Le drain 2 est placé entre un pilote électropneumatique 1 et un corps métallique 3 d'un distributeur pneumatique 4 d'un dispositif selon l'invention. Le drain 2 est logé dans un interstice 5 prévu entre le pilote électropneumatique 1 et le corps métallique 3 du distributeur pneumatique 4.

Le drain 2 peut être mis en contrainte afin de rendre le contact permanent entre les surfaces en regard. Le drain 2 peut être réalisé dans un matériau élastique ou rigide ou par polymérisation (ou solidification) d'un matériau liquide ou pâteux (figure 1).

Comme drain 2, on peut citer les pads 1000SF de la société Bergquist d'une conductivité thermique mesurée suivant la norme ASTM D5470 de 0,9 W/m-K pour une épaisseur de 0.254 à 3.175 mm et une dureté Shore 00 mesurée suivant la norme ASTM D 2240 de 40 ou les pads 575-NS de la société Parker d'une conductivité thermique mesurée suivant la norme ASTM D5470 de 1,2 W/m-K pour une épaisseur de 0.5 à 2.5 mm et une dureté Shore 00 mesurée suivant la norme ASTM D 2240 de 70.

De nombreuses variantes sont possibles à partir du mode de réalisation principal précédemment décrit.

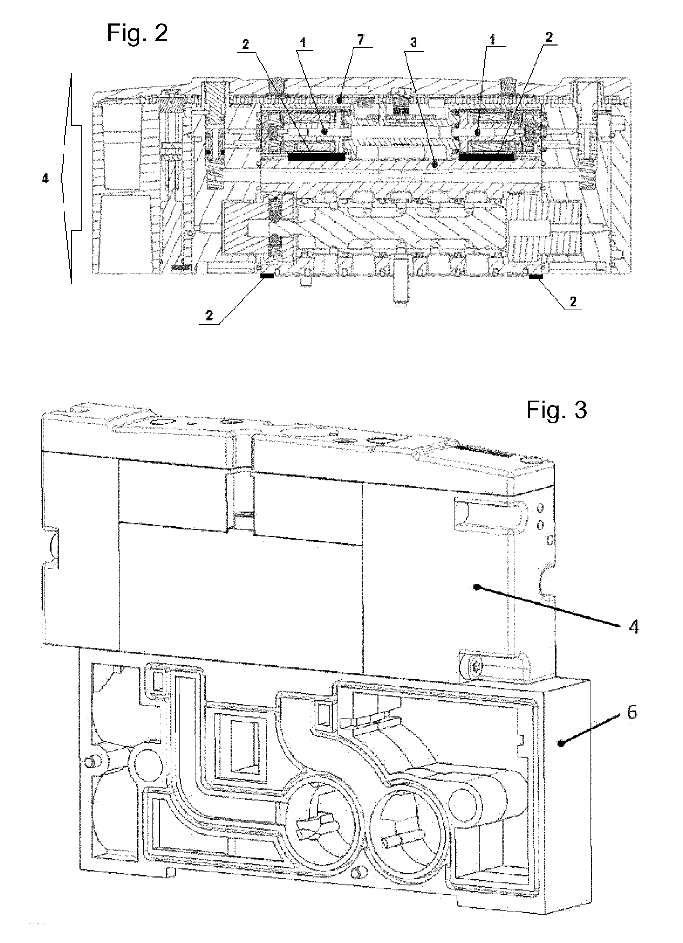

Le pilote électropneumatique 1 peut en variante être intégré complètement à l'intérieur du distributeur pneumatique 4, dans un boîtier 8. Un circuit électronique 7 additionnel peut être positionné à proximité du pilote électropneumatique 1, à l'intérieur du distributeur pneumatique 4. Plusieurs pilotes électropneumatiques peuvent être intégrés au sein du même distributeur pneumatique (figure 2).

Le distributeur pneumatique 4 peut également être assemblé sur une embase métallique 6.

Plusieurs drains peuvent également être ajoutés avantageusement dans le distributeur pneumatique 4 et/ou dans l'embase métallique 6, et/ou entre ces deux éléments, afin d'augmenter la conduction du flux thermique et la dissipation thermique de l'ensemble du ou des distributeur(s) pneumatique(s) 4 monté(s) sur l'embase métallique 6.

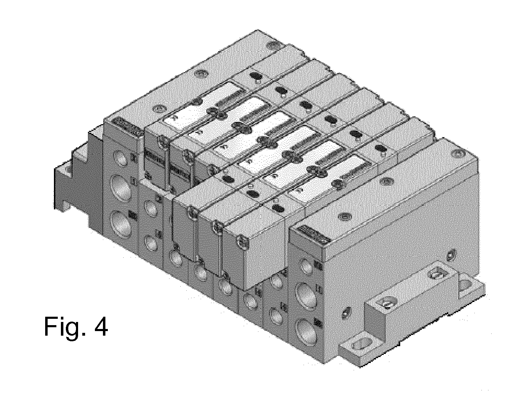

En particulier il est possible d'utiliser la capacité de dissipation thermique liée à la circulation de l'air comprimée dans les communs d'alimentation et d'échappement de l'embase, mais aussi d'utiliser les effets thermodynamiques intervenant dans le dispositif tels que le refroidissement par détente de l'air comprimé entre les orifices d'utilisation et d'échappement (figures 2, 3). Ce même principe s'applique aussi au mode de réalisation en ilots de distribution (figure 4).

Le dispositif selon l'invention permet d'augmenter la surface d'échange avec le milieu extérieur, mais aussi l'utilisation de l'embase pneumatique et sa circulation de flux d'air comprimé tels que notamment les communs d'alimentation et d'échappement des ilots de distribution.

## Revendications

1. Dispositif de distribution pneumatique comprenant au moins une vanne pilote électromagnétique (1), un corps de distribution (3) et au moins un drain thermique (2), présentant une conductivité thermique mesurée suivant la norme ASTM D5470 supérieure ou égale à 0.5 W/m-K, le drain thermique étant disposé entre au moins une vanne pilote électromagnétique (1) et le corps de distribution (3).

2. Dispositif de distribution pneumatique selon la revendication 1, **caractérisé en ce que** le drain thermique (2) présente une conductivité thermique mesurée suivant la norme ASTM D5470 supérieure ou égale à 0.9 W/m-K.

3. Dispositif de distribution pneumatique selon la revendication 1, **caractérisé en ce que** le drain thermique présente une conductivité thermique mesurée suivant la norme ASTM D5470 supérieure ou égale à 1.2 W/m-K.

4. Dispositif de distribution pneumatique selon l'une quelconque des revendications précédentes, **caractérisé en ce que** le dispositif est assemblé sur une embase pneumatique métallique [6], au moins un drain thermique étant interposé entre le corps de distribution et l'embase pneumatique.

5. Dispositif de distribution pneumatique selon l'une quelconque des revendications précédentes, **caractérisé en ce que** le drain thermique présente une dureté Shore 00 mesurée suivant la norme ASTM D 2240 comprise entre 30 et 80.

6. Dispositif de distribution pneumatique selon l'une quelconque des revendications précédentes, **caractérisé en ce que** le drain thermique présente une dureté Shore 00 mesurée suivant la norme ASTM D 2240 comprise entre 40 et 70.

7. Dispositif de distribution pneumatique selon l'une quelconque des revendications précédentes, **caractérisé en ce que** le drain thermique présente une dureté Shore 00 mesurée suivant la norme ASTM D 2240 comprise entre 40 et 50.

8. Dispositif de distribution pneumatique selon l'une quelconque des revendications précédentes, **caractérisé en ce que** le drain thermique est obtenu par polymérisation ou solidification d'un matériau liquide ou pâteux.

9. Dispositif de distribution pneumatique selon l'une quelconque des revendications précédentes, caractérisé en que au moins une vanne pilote est intégrée dans le corps de distribution.

## Patentansprüche

1. Pneumatische Verteilungsvorrichtung, umfassend mindestens ein elektromagnetisches Steuerventil (1), einen Verteilungskörper (3) und mindestens einen Kühlkörper (2), der eine gemäß der Norm ASTM D5470 gemessene Wärmeleitfähigkeit von größer oder gleich 0,5 W/mK aufweist, wobei der Kühlkörper zwischen mindestens einem elektromagnetischen Steuerventil (1) und dem Verteilungskörper (3) angeordnet ist.

2. Pneumatische Verteilungsvorrichtung nach Anspruch 1, **gekennzeichnet dadurch, dass** der Kühlkörper (2) eine gemäß der Norm ASTM D5470 gemessene Wärmeleitfähigkeit von größer oder gleich 0,9 W/mK aufweist.

3. Pneumatische Verteilungsvorrichtung nach Anspruch 1, **gekennzeichnet dadurch, dass** der Kühlkörper eine gemäß der Norm ASTM D5470 gemessene Wärmeleitfähigkeit von größer oder gleich 1,2 W/mK aufweist.

4. Pneumatische Verteilungsvorrichtung nach einem der vorhergehenden Ansprüche, **gekennzeichnet dadurch, dass** die Vorrichtung auf einer pneumatischen Metallbasis (6) angebracht ist, wobei mindestens ein Kühlkörper zwischen dem Verteilungskörper und der pneumatischen Basis angeordnet ist.

5. Pneumatische Verteilungsvorrichtung nach einem der vorhergehenden Ansprüche, **gekennzeichnet dadurch, dass** der Kühlkörper eine gemäß der Norm ASTM D 2240 gemessene Härte Shore 00 im Bereich von 30 bis 80 aufweist.

6. Pneumatische Verteilungsvorrichtung nach einem der vorhergehenden Ansprüche, **gekennzeichnet dadurch, dass** der Kühlkörper eine gemäß der Norm ASTM D 2240 gemessene Härte Shore 00 im Bereich von 40 bis 70 aufweist.

7. Pneumatische Verteilungsvorrichtung nach einem der vorhergehenden Ansprüche, **gekennzeichnet dadurch, dass** der Kühlkörper eine gemäß der Norm ASTM D2240 gemessene Härte Shore 00 im Bereich von 40 bis 50 aufweist.

8. Pneumatische Verteilungsvorrichtung nach einem der vorhergehenden Ansprüche, **gekennzeichnet dadurch, dass** der Kühlkörper durch Polymerisierung oder Verfestigung eines flüssigen oder pastösen Materials erhalten wurde.

9. Pneumatische Verteilungsvorrichtung nach einem der vorhergehenden Ansprüche, **gekennzeichnet dadurch, dass** mindestens ein Steuerventil im Verteilungskörper integriert ist.

## Claims

1. Pneumatic distribution device comprising at least one electromagnetic pilot valve (1), a distribution body (3) and a heat sink having a thermal conductivity, tested in accordance with the ASTM D5470 standard, greater than or equal to 0.5 W/m-K, the heat sink being arranged between at least one electromagnetic pilot valve (1) and the distribution body (3).

2. Pneumatic distribution device according to Claim 1, **characterized in that** the heat sink (2) has a thermal conductivity, tested in accordance with the ASTM D5470 standard, greater than or equal to 0.9 W/m-K.

3. Pneumatic distribution device according to Claim 1, **characterized in that** the heat sink has a thermal conductivity, tested in accordance with the ASTM D5470 standard, greater than or equal to 1.2 W/m-K.

4. Pneumatic distribution device according to any one of the preceding claims, **characterized in that** the device is assembled onto a metallic pneumatic base [6], at least one heat sink being interposed between the distribution body and the pneumatic base.

5. Pneumatic distribution device according to any one of the preceding claims, **characterized in that** the heat sink has a Shore 00 hardness, tested in accordance with the ASTM D 2240 standard, of between 30 and 80.

6. Pneumatic distribution device according to any one of the preceding claims, **characterized in that** the heat sink has a Shore 00 hardness, tested in accordance with the ASTM D 2240 standard, of between 40 and 70.

7. Pneumatic distribution device according to any one of the preceding claims, **characterized in that** the heat sink has a Shore 00 hardiness, tested in accordance with the ASTM D 2240 standard, of between 40 and 50.

8. Pneumatic distribution device according to any one of the preceding claims, **characterized in that** the heat sink is obtained by polymerizing or solidifying a liquid or pasty material.

9. Pneumatic distribution device according to any one of the preceding claims, **characterized in that** at least one pilot valve is built into the distribution body.
